Europäisches Patentamt

(19) European Patent Office

Office européen des brevets

(11) Veröffentlichungsnummer: **0 124 748**
**B1**

(12) # EUROPÄISCHE PATENTSCHRIFT

(45) Veröffentlichungstag der Patentschrift:
29.10.86

(21) Anmeldenummer: 84103457.2

(22) Anmeldetag: 29.03.84

(51) Int. Cl.⁴: **C 04 B 41/49**, C 04 B 24/42,
C 08 G 77/04

(54) Zubereitung zum Wasserabweisendmachen anorganischer Baustoffe.

(30) Priorität: 11.04.83 DE 3312911

(43) Veröffentlichungstag der Anmeldung:
14.11.84 Patentblatt 84/46

(45) Bekanntmachung des Hinweises auf die Patenterteilung:
29.10.86 Patentblatt 86/44

(84) Benannte Vertragsstaaten:
BE DE FR GB IT NL

(56) Entgegenhaltungen:
EP - A - 0 053 223
DE - B - 1 284 007
DE - B - 1 671 280
GB - A - 771 844
GB - A - 1 302 529
US - A - 4 209 432

(73) Patentinhaber: Th. Goldschmidt AG,
Goldschmidtstrasse 100 Postfach 101461,
D-4300 Essen 1 (DE)

(72) Erfinder: Fritsch, Herwig, Theodor-Heuss-Strasse 111,
D-4390 Gladbeck (DE)
Erfinder: Koerner, Götz, Dr., Kantorie 126, D-4300 Essen
(DE)
Erfinder: Quilitsch, Herbert, Moselstrasse 125,
D-5628 Heiligenhaus (DE)
Erfinder: Schamberg, Eckehard, Dr., Grotehang 6,
D-4300 Essen 15 (DE)

**Beschreibung**

Die Erfindung betrifft eine Zubereitung zum Wasserabweisendmachen anorganischer Baustoffe vor oder nach ihrer Formgebung mit einem Gehalt an Organoalkoxysiloxanen der allgemeinen Formel

$$R^1_a\text{-}Si\text{-}(OR^2)_b$$
$$|$$
$$O_{4-(a+b)}$$
$$\overline{2}$$

wobei R$^1$ ein Alkyl- oder Arylrest,

R$^2$ ein Alkylrest mit 1 bis 4 Kohlenstoffatomen,

a = 0,8 bis 1,5 und

b = ≤ 2 ist.

Unter dem Begriff Baustoffe sollen im Rahmen dieser Erfindung mit z.B. Wasser oder Kohlensäure abbindende Baustoffe, wie Mörtel, Gips, Zement, als auch natürliche, geformte, abgebundene oder durch Brennen verfestigte Baustoffe, wie Sandsteine, Ziegel, Bimssteine, Betonformkörper oder hieraus gebildete Mauerwerke verstanden werden.

Der Begriff des Wasserabweisendmachens anorganischer Baustoffe beinhaltet sowohl die Verhinderung oder die Reduktion der Wasseraufnahme des Baustoffes wie auch die Erniedrigung der Oberflächenspannung des Baustoffes, so dass dessen Oberfläche nicht mehr von Wasser benetzt werden kann. Als Mass für die Wirksamkeit solcher Zubereitungen gilt daher häufig die Grösse des Randwinkels eines Wassertropfens auf der behandelten Oberfläche («Chemie und Technologie der Silicone» von W. Noll, Verlag Chemie, 1968, Seite 387). Dieser Randwinkel gibt aber keine Auskunft darüber, wieviel Wasser der behandelte Baustoff aufzunehmen in der Lage ist oder aufgenommen hat, wenn er sich im Gleichgewicht mit seiner Wasser bzw. Wasserdampf enthaltenden Umgebung befindet.

Die Menge des aufgenommenen Wassers in einem Baustoff lässt sich in der Praxis nicht exakt festlegen, weil die Wassermenge von äusseren Bedingungen und dem Zustand des Baustoffes abhängt. Es ist aber möglich, unter standardisierten Bedingungen die Wasseraufnahme eines Baustoffes zu messen, wie z.B. aus seiner Gewichtszunahme, und so ein relatives Mass für die Wirksamkeit der wasserabweisendmachenden Zubereitung zu erhalten. Angestrebt wird sowohl eine gute Erniedrigung der Oberflächenspannung des behandelten Baustoffes wie auch ein möglichst tiefes Eindringen des Imprägnierungsmittels in den Baustoff und damit eine Verringerung der Wasseraufnahme des Baustoffes.

Zum Wasserabweisendmachen von Baustoffen, wie Sandstein, Kalksandstein, Mörtel, Ziegel und Beton, werden seit vielen Jahren mit Erfolg Siliconharze eingesetzt. Die Siliconharze werden in an sich bekannter Weise aus den entsprechenden Silanen durch Hydrolyse oder Alkoholyse und Kondensation erhalten. Die Siliconharze werden dabei in Form verdünnter Imprägnierlösungen auf den Baustoff aufgebracht. Als Lösungsmittel verwendet man im allgemeinen Kohlenwasserstoffe, wie z.B. Leichtbenzin. An die Siliciumatome sind als Organogruppe Alkyl- und/oder Arylgruppen gebunden. Bevorzugt sind die am einfachsten zugänglichen Methylsiliconharze. Dieser Stand der Technik ergibt sich u.a. aus der DE-OS 2 023 976, DE-OS 2 356 142 und DE-AS 2 558 184. Man hat auch bereits empfohlen, zur Erhöhung der Alkalistabilität Alkylreste mit längerer Kohlenstoffkette zu verwenden (Zeitschrift «Bautenschutz und Bausanierung», 1980, Seiten 145 bis 147).

Um eine wirksame Hydrophobierung zu erzielen, müssen die Imprägiermittel möglichst tief in das Kapillarsystem des Baustoffes eindringen. Diese Penetrierfähigkeit nimmt jedoch mit steigendem Molekulargewicht der Siliconharze ab. Ausserdem können hochmolekulare Siliconharze dann kaum verwendet werden, wenn sehr dichte Baustoffe, wie z.B. Beton, hydrophobiert werden sollen.

Die DE-AS 2 029 446 beschreibt daher auch bereits die Verwendung von Organosilanen zum direkten Imprägnieren von Mauerwerk. Diese Silane dringen zwar tief in den Baustoff ein, haben jedoch relativ hohe Dampfdrucke, so dass sie häufig auf der Oberfläche bereits verdampfen, bevor sie kondensieren und/oder mit dem anorganischen Baustoff reagieren können.

Verwendet man niedermolekulare Siloxane zum Imprägnieren von Baustoffen, so werden diese niedermolekularen Siloxane von der Oberfläche verhältnismässig leicht wieder abgewaschen, wodurch auch in diesem Fall die Hydrophobierung der Oberfläche unbefriedigend ist.

Zur Verbesserung der Absperrung der Oberfläche und zur Erzielung eines hohen Abperleffektes ist in der DE-OS 2 558 184 beschrieben, Füllstoffe, wie z.B. SiO$_2$ mit einer spezifischen Oberfläche von mehr als 50 M$^2$/g, den Imprägnierzubereitungen zuzusetzen. Jedoch wird auch dieser Füllstoff mit der Zeit abgetragen oder abgewaschen, so dass der durch ihn verursachte Effekt nach einiger Zeit verschwindet.

Dem Fachmann stellt sich deshalb immer noch das Problem, eine Zubereitung zu finden, welche einerseits tief in den Baustoff penetriert, andererseits einen lange Zeit wirksamen Wasserabperleffekt auf der Oberfläche bewirkt. Hinzu kommt die Hydrolyseempfindlichkeit der Siloxane auf alkalischen Medien, wie z.B. Beton und frischem Mörtel.

Der vorliegenden Erfindung liegt die Aufgabe zugrunde, ein Imprägniermittel zu finden, welches diesen Forderungen, nämlich hohe Eindringtiefe bei guter Hydrophobierung der Oberfläche, entspricht und wobei die hydrophobierende Wirkung auch auf alkalischen Untergründen lange Zeit anhalten soll.

Überraschenderweise wurde gefunden, dass diese Bedingungen von einer Zubereitung erfüllt werden, welche dadurch gekennzeichnet ist, dass

a) 1 bis 20 Gew.-% eines Gemisches von Organoalkoxysiloxanen der vorgenannten Formel, wobei 25 bis 75 Gew.-% der Organoalkoxysiloxane einen b-Wert von 0,1 bis 0,5 (Siloxane A) und 75 bis 25 Gew.-% der Organoalkoxysiloxane einen b-Wert von 0,8 bis 2,0 (Siloxane B) haben, und wobei die Summe von a und b ≤ 3 ist,

b) 80 bis 99 Gew.-% eines mit Wasser nicht mischbaren Lösungsmittels und gegebenenfalls
c) an sich bekannte Kondensationskatalysatoren
enthält.

Besonders bevorzugt sind Zubereitungen, die als Siloxan A ein Organoalkoxysiloxan mit einem b-Wert von 0,15 bis 0,25 enthalten und insbesondere ein Molekulargewicht von 5000 bis 20 000 aufweisen.

Zu den bevorzugten Zubereitungen gehören auch solche, die als Siloxan B ein Organoalkoxysiloxan mit einem b-Wert von 0,8 bis 1,2 enthalten und insbesondere ein Molekulargewicht von 250 bis 1000 aufweisen.

$R^1$ ist ein Alkylrest, insbesondere mit 1 bis 4 Kohlenstoffatomen, wobei der Methylrest besonders bevorzugt ist. $R^1$ kann auch ein Arylrest, insbesondere ein Phenylrest sein.

$R^2$ ist ein Alkylrest mit 1 bis 4 Kohlenstoffatomen, insbesondere ein Ethylrest.

Der Index a hat einen Wert von 0,8 bis 1,5, jedoch ist der Wert a = 1 bevorzugt.

Die angegebenen Molekulargewichte sind mit Hilfe der Gelchromatographie ermittelt. Als Eichsubstanz diente Polystyrol.

Die Herstellung der in den erfindungsgemässen Zubereitungen enthaltenen Organoalkoxysiloxane A und B kann nach aus dem Stand der Technik bekannten Verfahren erfolgen. Man setzt dabei zum Beispiel ein Alkyltrichlorsilan, wie Methyltrichlorsilan, mit einem Wasser/Alkoholgemisch um, wobei der Alkohol der Formel $R^2OH$ entspricht. Dabei lassen sich der b-Wert und das gewünschte Molekulargewicht durch das Verhältnis Alkohol/Wasser und durch die Reaktionsbedingungen, insbesondere durch geeignete Temperaturführung, einstellen bzw. erzielen.

Das Wesen der vorliegenden Erfindung besteht somit darin, die Imprägnierung nicht mit einem Organoalkoxysiloxan durchzuführen, dessen Molekulargewichtsverteilung im wesentlichen nur ein einziges Maximum aufweist, sondern ein Gemisch von Organoalkoxysiloxanen zu verwenden, die sich im Kondensationsgrad unterscheiden. Das Gemisch enthält einerseits ein Organoalkoxysiloxan verhältnismässig hohen Kondensationsgrades und ein Organoalkoxysiloxan eines relativ niedrigen Kondensationsgrades. Untersucht man das in der erfindungsgemässen Zubereitung enthaltene Organoalkoxysiloxangemisch durch geeignete analytische Verfahren, wie z.B. mittels der Gelpermeationschromatographie, findet man zwei ausgeprägte Maxima der Molekulargewichtsverteilung.

Obwohl das Organoalkoxysiloxangemisch aus einem Teil relativ niedrigkondensierter und einem Teil relativ hochkondensierter Organoalkoxysiloxane besteht, kann man mathematisch einen mittleren Kondensationsgrad ermitteln. Dieser mittlere Kondensationsgrad entspricht einem Wert b von etwa 0,3 bis 1,6, bevorzugt ist ein Wert b von 0,3 bis 0,5.

Es war ausserordentlich überraschend, dass die Stabilität des in der erfindungsgemässen Zubereitung enthaltenen Organoalkoxysiloxangemisches gegenüber Alkali, z.B. auf alkalischem Mauerwerk, hoch ist. Dies ist auch dann der Fall, wenn die Gruppe $R^1$ ausschliesslich eine Methylgruppe ist. Verwendet man nur das hochmolekulare Organoalkoxysiloxan, welches in dem Gemisch enthalten ist, beobachtet man neben unzureichender Eindringtiefe, verbunden mit hoher Wasseraufnahme, nur relativ geringe Alkalistabilität. Verwendet man nur das in dem Gemisch der erfindungsgemässen Zubereitung enthaltene niedermolekulare Organoalkoxysiloxan, erzielt man zwar eine hohe Eindringtiefe, aber nur geringe Oberflächenwirksamkeit und ebenfalls geringe Alkalistabilität. Die Kombination, wie sie Wesen der Erfindung ist, zeigt aber überraschenderweise deutlich verbesserte Penetration und Alkalistabilität.

Die erfindungsgemässe Zubereitung enthält das erfindungswesentliche Organoalkoxysiloxangemisch in einem mit Wasser nicht mischbaren Lösungsmittel gelöst. Verwendbar sind die aus dem Stand der Technik bekannten Lösungsmittel, wie Leichtbenzin oder andere technisch anfallende Kohlenwasserstofflösungsmittel.

Die Zubereitung kann an sich bekannte Kondensationskatalysatoren, wie Dibutylzinndilaurat oder Tetrabutyltitanat in Mengen von 0,1 bis 1 Gew.-%, bezogen auf Organoalkoxysiloxangemisch, enthalten.

Die Alkalistabilität der auf den anorganischen Baustoffen befindlichen Organoalkoxysiloxane kann auf folgende Art bestimmt werden: Ein Würfel aus dem anorganischen Baustoff, z.B. aus Kalksandstein, mit einer Kantenlänge von 5 cm wird bis zur Gewichtskonstanz bei 20°C und 60% relativer Luftfeuchte konditioniert. Der Würfel wird dann 60 Sekunden in die Imprägnierlösung getaucht, 1 Woche bei 20°C und 60% relativer Luftfeuchte zwecks Aushärtung der Organoalkoxysiloxane gelagert und anschliessend in 0,1 n KOH gelegt. Der Baustoffwürfel wird nach einer bestimmten Zeit aus der Kaliumhydroxidlösung herausgenommen, von oberflächlich anhaftender Flüssigkeit befreit und gewogen. Durch verschieden lange Lagerzeiten in der kaliumhydroxidlösung wird so die Beständigkeit gegen deren Angriff bestimmt. Je grösser die Wasseraufnahme ist, desto geringer ist die Alkalibeständigkeit des Organoalkoxysiloxans.

Die Wasseraufnahme gemäss Britisch Standards BS 3286, Appendix D, wird wie folgt geprüft: Die Prüfkörper (100 × 100 × 25 mm) werden mit der zu imprägnierenden Seite nach unten 15 Sekunden lang in die Imprägnierlösung getaucht, während die nach oben weisende gegenüberliegende Probenseite nicht imprägniert wird. Nach 10 Tagen Wartezeit wird die Wasseraufnahme gemessen, indem die Probekörper mit der imprägnierten Seite nach unten auf eine feuchte Unterlage gelegt werden. Nach 7 Tagen wird die Gewichtszunahme gemessen: $a_1 = a' - a_0$ ($a_0$ = Gewicht vor Feuchtigkeitsaufnahme, $a'$ = Gewicht nach Feuchtigkeitsaufnahme). Nun werden die Probekörper umgedreht und mit der nicht imprägierten Seite nach unten auf die feuchte Unterlage gelegt. Nach 3 Tagen wird die Gewichtszunahme gemessen: $a_2 = a'' - a_0$ ($a_0$ = Gewicht vor Feuchtigkeitsaufnahme, $a''$ = Gewicht nach Feuchtigkeitsaufnahme). Die Bewertung der Probekörper erfolgt nach: $\dfrac{a_1}{a_2} \cdot 100 = A$ [%]. Nach British Standard darf der Wert für A 10% nicht überschreiten.

Der Wasserabperleffekt wird optisch beurteilt, indem auf eine in einem Winkel von 45 Grad geneigte Fläche aus einer Höhe von 20 cm Wassertropfen fallen gelassen werden. Der Abperleffekt ist sehr gut, wenn die auffallenden Tropfen vollständig, ohne Hinterlassung von Feuchtigkeitsspuren, ablaufen. Der Abperleffekt ist gut, wenn nur eine leichte Benetzung der Oberfläche auftritt, und er ist schlecht, wenn der Wassertropfen vom Baustoff aufgesogen wird.

In den folgenden Beispielen werden die Zusammensetzung verchiedener erfindungsgemässer Zubereitungen und ihre nicht beanspruchte Herstellung gezeigt. Es werden die Alkalistabilität und der Abperleffekt der erfindungsgemässen Zubereitungen gezeigt und mit den Eigenschaften der Komponenten des Organoalkoxysiloxangemisches verglichen.

*Besispiel 1*

a) Aus Methyltrichlorsilan, Ethanol und Wasser wird ein Methylethoxysiloxan hersgestellt, das einen Ethoxygehalt von 12,0 Gew.-% aufweist. Das Produkt entspricht damit der Formel

$$\frac{CH_3-Si-(OC_2H_5)_{0,2}}{\underset{\displaystyle 2}{\overset{\displaystyle |}{O_{2,8}}}}$$

Es ist eine hochviskose Flüssigkeit.

b) Aus Methyltrichlorsilan, Ethanol und Wasser wird ein Methylethoxysiloxan hergestellt, das einen Ethoxygehalt von 43,3 Gew.-% aufweist. Das Produkt entspricht damit der Formel

$$\frac{CH_3-Si-(OC_2H_5)_{1,0}}{\underset{\displaystyle 2}{\overset{\displaystyle |}{O_{2,0}}}}$$

Es ist eine niedrigviskose Flüssigkeit.

c) 100 Gew.-Teile des nach a) hergestellten und 73,9 Gew.-Teile des nach b) hergestellten Methylethoxysiloxans werden gemischt, wodurch sich ein Ethoxygehalt der Mischung von 22 Gew.-% ergibt. Das entspricht einem Wert für b) von 0,4 im verwendeten Gemisch. Nun werden 10 Gew.-Teile der Siloxanmischung mit 152,8 Gew.-Teilen Testbenzin und 1 Gew.-Teil Dibutylzinndilaurat (10 Gew.-%-ig in Testbenzin) versetzt. Die so erhaltene Imprägnierlösung 1 wird anwendungstechnisch geprüft. Die Ergebnisse sind der Tabelle zu entnehmen.

d) Die Imprägnierlösung 2 wurde durch Mischen von 75 Gew.-Teilen des nach a) und 25 Gew.-Teilen des nach b) hergestellten Siloxans erhalten (Ethoxygehalt 19,8 Gew.-%), indem 10 Gew.-Teile der Mischung mit 156,4 Gew.-Teilen Testbenzin und 1 Gew.-Teil Dibutylzinndilaurat (10 gew.-%ig in Testbenzin) vermischt wurden.

e) Die Imprägnierung 3 wurde durch Mischen von 25 Gew.-Teilen des nach a) und 75 Gew.-Teilen des nach b) hergestellten Siloxans erhalten (Ethoxygehalt 35,5 Gew.-%), indem 10 Gew.-Teile der Mischung mit 130,6 Gew.-Teilen Testbenzin und 1 Gew.-Teil Dibutylzinndilaurat (10 gew.-%ig in Testbenzin) vermischt wurden.

f) Die Imprägnierlösung 4 wurde durch Mischen von 50 Gew.-Teilen des nach a) und 50 Gew.-Teilen des nach b) hergestellten Siloxans erhalten. Der Ethoxygehalt betrug 27,7 Gew.-%. 10 Gew.-Teile der Mischung und 143,4 Gew.-teile Testbenzin wurden mit 1 Gew.-Teil Dibutylzinndilaurat (10 gew.-%ig in Testbenzin) vermischt.

*Beispiel 2*

(nichterfindungsgemässes Vergleichsbeispiel)

Aus Methyltrichlorsilan, Ethanol und Wasser wird ein Methylethoxysiloxan hergestellt, das einen Ethoxygehalt von 22 Gew.-% aufweist. Nun werden 10 Gew.-Teile dieses Siloxans mit 152,8 Gew.-Teilen Testbenzin und 1 Gew.-Teil Dibutylzinndilaurat (10 gew.-%ig in Testbenzin) vermischt. Die so erhaltene Imprägnierlösung 5 wird anwendungstechnisch geprüft. Die Ergebnisse sind in der Tabelle wiedergegeben.

*Beispiel 3*

(nichterfindungsgemässes Vergleichsbeispiel)

10 Gew.-Teile des Methylethoxysiloxans aus Beispiel 1 a) werden mit 169,2 Gew.-Teilen Testbenzin und 1 Gew.-Teil Dibutilzinndilaurat (10 gew.-%ig in Testbenzin) gemischt. Die so erhaltene Imprägnierlösung 6 wird anwendungstechnisch geprüft. Die Ergebnisse sind der Tabelle zu entnehmen.

*Beispiel 4*

(nichterfindungsgemässes Vergleichsbeispiel)

10 Gew.-Teile des Methylethoxysiloxans aus Beispiel 1 b) werden mit 117,8 Gew.-Teilen Testbenzin und 1 Gew.-Teil Dibutylzinndilaurat (10 gew.-%ig in Testbenzin) gemischt. Die so erhaltene Imprägnierlösung 7 wird anwendungstechnisch geprüft. Die Ergebnisse sind in der Tabelle wiedergegeben.

## TABELLE 1

### Anwendungstechnische Prüfung von 8 Imprägnierlösungen auf Kalksandsteinwürfeln

Die Messerfehler bei:

Wasseraufnahme $\leq$ 1,5%  $\pm$ 0,2
1,5 - 3,0%  $\pm$ 0,5
3,0%  $\pm$ 1,0

| | | Wasseraufnahme in Gew.-% nach ... Std. Lagerung in n/10 KOH | | | | | | | | Apberleffekt | |
| | | 24 | 48 | 72 | 96 | 120 | 144 | 168 | 288 | 7 Tage nach Applikation | nach 6 Monaten Freilagerung |
|---|---|---|---|---|---|---|---|---|---|---|---|
| | nicht imprägniert | 10,2 | — | — | — | — | — | — | — | schlecht | schlecht |
| erfindungsgemäss | Imprägnierlösung 1 $\delta$ = 0,4 | 0,7 | 1,2 | 1,5 | 2,0 | 2,4 | 2,5 | 2,9 | 3,8 | sehr gut | sehr gut |
| | Imprägnierlösung 2 75/25 $\delta$ = 0,35 | 1,0 | 1,6 | 2,0 | 2,3 | 2,5 | 2,7 | 3,0 | 3,5 | sehr gut | sehr gut |
| | Imprägnierlösung 3 25/75 $\delta$ = 0,75 | 2,0 | 6,1 | 7,3 | 7,4 | 7,6 | — | — | — | sehr gut | gut |
| | Imprägnierlösung 4 50/50 $\delta$ = 0,53 | 0,8 | 1,3 | 1,5 | 2,4 | 2,7 | 2,9 | 3,2 | 3,7 | sehr gut | sehr gut |
| nicht erfindungsgemäss | Imprägnierlösung 5 $\delta$ = 0,4 | 1,4 | 5,1 | 8,0 | — | — | — | — | — | gut | schlecht |
| | Imprägnierlösung 6 $\delta$ = 0,2 | 1,4 | 2,7 | 3,7 | 5,4 | 6,2 | 7,4 | 7,7 | — | sehr gut | sehr gut |
| | Imprägnierlösung 7 $\delta$ = 1,0 | 1,6 | 6,1 | 7,1 | 7,4 | 7,7 | — | — | — | gut | schlecht |
| | Imprägnierlösung 8 des Standes der Technik | 0,5 | 1,2 | 3,6 | 5,8 | — | — | — | — | sehr gut | schlecht |

### TABELLE 2

| | Wasseraufnahme A [%] nach British Standard BS 3286 |
|---|---|
| Imprägnierlösung 2 | 9,2 |
| Imprägnierlösung 3 | 4,8 |
| Imprägnierlösung 4 | 4,3 |
| Imprägnierlösung 6 | 96 |

Die Ergebnisse dieser Prüfung zeigen, dass die Penetration der Imprägnierlösung 3 nicht ausreicht, um auf natürlichem Kalksandstein niedrige Wasseraufnahme zu erzielen, während die erfindungsgemässen Imprägnierlösungen die geforderte niedrige Wasseraufnahme von < 10% erfüllen.

### Patentansprüche

1. Zubereitung zum Wasserabweisendmachen anorganischer Baustoffe vor oder nach ihrer Formgebung mit einem Gehalt an Organoalkoxysiloxanen der allgemeinen Formel

$$\frac{R^1_a\text{-Si-(OR}^2)_b \mid O_{4-(a+b)}}{2}$$

wobei $R^1$ ein Alkyl- oder Arylrest,
$R^2$ ein Alkylrest mit 1 bis 4 Kohlenstoffatomen,
a = 0,8 bis 1,5 und
b = $\leq$ 2 ist.

dadurch gekennzeichnet, dass sie

a) 1 bis 20 Gew.-% eines Gemisches von Organoalkoxysiloxanen der vorgenannten Formel, wobei 25 bis 75 Gew.-% der Organoalkoxysiloxane einen b-Wert von 0,1 bis 0,5 (Siloxane A) und 75 bis 25 Gew.-% der Organoalkoxysiloxane einen b-Wert von 0,08 bis 2,0 (Siloxane B) haben, und wobei die Summe von a und b $\leq$ 3 ist,

b) 80 bis 99 Gew.-% eines mit Wasser nicht mischbaren Lösungsmittels und gegebenenfalls

c) an sich bekannte Kondensationskatalysatoren enthält.

2. Zubereitung nach Anspruch 1, dadurch gekennzeichnet, dass sie als Siloxan A ein Organoalkoxysiloxan mit einem b-Wert von 0,15 bis 0,25 enthält.

3. Zubereitung nach Anspruch 1 oder 2, dadurch gekennzeichnet, dass sie als Siloxan A ein Organoalkoxysiloxan mit einem Molekulargewicht von 5000 bis 20 000 enthält.

4. Zubereitung nach Anspruch 1, dadurch gekennzeichnet, dass sie als Siloxan B ein Organoalkoxysiloxan mit einem b-Wert von 0,8 bis 1,2 enthält.

5. Zubereitung nach Anspruch 1 oder 4, dadurch gekennzeichnet, dass sie als Siloxan B ein Organoalkoxysiloxan mit einem Molekulargewicht von 250 bis 1000 enthält.

6. Zubereitung nach einem oder mehreren der vorhergehenden Ansprüche, dadurch gekennzeichnet, dass sie Organoalkoxysiloxane, deren Reste $R^1$ Methylreste sind, enthält.

7. Zubereitung nach einem oder mehreren der vorhergehenden Ansprüche, dadurch gekennzeichnet, dass sie Organoalkoxysiloxane, deren Reste $R^2$ Ethylreste sind, enthält.

8. Zubereitung nach einem oder mehreren der vorhergehenden Ansprüche, dadurch gekennzeichnet, dass sie Organoalkoxysiloxane, deren a-Wert = 1 ist, enthält.

## Claims

1. Preparation for rendering inorganic building materials water-repellent before or after their shaping, with a content of organoalkoxysiloxanes of the general formula

$$\frac{R^1_a\text{-Si-}(OR^2)_b \quad | \quad O_{4\text{-}(a+b)}}{2}$$

where  $R^1$ is an alkyl or alkyl radical,
   $R^2$ is an alkyl radical having 1 to 4 carbon atoms,
   a is 0.8 to 1.5 and
   b is $\leqslant$ 2,

characterised in that it contains

a) 1 to 20% by weight of a mixture of organoalkoxysiloxanes of the above formula, 25 to 75% by weight of the organoalkoxysiloxanes having a b value of 0.1 to 0.5 (siloxanes A) and 75 to 25% by weight of the organoalkoxysiloxanes having a b value of 0.8 to 2.0 (siloxanes B), and the sum of a and b being $\leqslant$ 3,
b) 80 to 99% by weight of a water-immiscible solvent and, if appropriate,
c) condensation catalysts known per se.

2. Preparation according to Claim 1, characterized in that it contains an organoalkoxysiloxane having a b value of 0.15 to 0.25 as the siloxane A.

3. Preparation according to Claim 1 or 2, characterized in that it contains an organoalkoxysiloxane having a molecular weight of 5,000 to 20,000 as the siloxane A.

4. Preparation according to Claim 1, characterized in that it contains an organoalkoxysiloxane having a b value of 0.8 to 1.2 as the siloxane B.

5. Preparation according to Claim 1 or 4, characterized in that it contains an organoalkoxysiloxane having a molecular weight of 250 to 1,000 as the siloxane B.

6. Preparation according to one or more of the preceding claims, characterized in that it contains organoalkoxysiloxanes, the radicals $R^1$ of which are methyl radicals.

7. Preparation according to one or more of the preceding claims, characterized in that it contains organoalkoxysiloxanes, the radicals $R^2$ of which are ethyl radicals.

8. Preparation according to one or more of the preceding claims, characterized in that it contains organoalkoxysiloxanes, the a value of which is 1.

## Revendications

1. Préparation pour hydrofuger des matériaux de construction inorganiques, avant ou après leur façonnage, contenant des organoalcoxysiloxanes de formule générale

$$\frac{R^1_a\text{-Si-}(OR^2)_b \quad | \quad O_{4\text{-}(a+b)}}{2}$$

dans laquelle $R^1$ est un radical alkyle ou aryle,
   $R^2$ est un radical alkyle ayant de 1 à 4 atomes de carbone,
   a = 0,8 à 1,5 et
   b $\leqq$ 2

caractérisé en ce qu'elle contient

a) 1 à 20% en poids d'un mélange d'organoalcoxysiloxanes ayant la formule ci-dessus, où 25 à 75% en poids des organoalcoxysiloxanes ont un indice b de 0,1 à 0,5 (siloxanes A) et 75 à 25% en poids des organoalcoxysiloxanes ont un indice b de 0,8 à 2,0 (siloxanes B), la somma a + b étant $\leqq$ 3,
b) 80 à 99% en poids d'un solvant non-miscible à l'eau et éventuellement
c) des catalyseurs de condensation connus en soi.

2. Préparation selon la revendication 1, caractérisée en ce qu'elle contient en tant que siloxane A un organoalcoxysiloxane ayant un indice b de 0,15 à 0,25.

3. Préparation selon la revendication 1 ou 2, caractérisée en ce qu'elle contient en tant que siloxane A un organoalcoxysiloxane ayant une masse moléculaire de 5000 à 20 000.

4. Préparation selon la revendication 1, caractérisée en ce qu'elle contient en tant que siloxane B un organoalcoxysiloxane ayant un indice b de 0,8 à 1,2.

5. Préparation selon la revendication 1 ou 4, caractérisée en ce qu'elle contient en tant que siloxane B un organoalcoxysiloxane ayant une masse moléculaire de 250 à 1000.

6. Préparation selon une ou plusieurs des revendications précédentes, caractérisée en ce qu'elle contient des organoalcoxysiloxanes dont les radicaux $R^1$ sont des radicaux méthyle.

7. Préparation selon une ou plusieurs des revendications précédentes, caractérisée en ce qu'elle contient des organoalcoxysiloxanes dont les radicaux $R^2$ sont des radicaux éthyle.

8. Préparation selon une ou plusieurs des revendications précédentes, caractérisée en ce qu'elle contient des organoalcoxysiloxanes dont l'indice a = 1.